# EUROPEAN PATENT SPECIFICATION

(11) **EP 2 579 188 B1**
(45) Date of publication and mention of the grant of the patent: **21.03.2018**
(21) Application number: 11184182.1
(22) Date of filing: 06.10.2011
(51) Int. Cl.: G06M 1/10, G06M 7/00, A01K 45/00

(54) **Chick counter and method for counting chicks**
Kükenzähler und Verfahren zum Zählen von Küken
Dispositif de comptage de poussins et procédé de comptage de poussins

(43) Date of publication of application: 10.04.2013
(73) Proprietor: Pas Reform BV, 7038 CH Zeddam (NL)
(72) Inventor: Weekers, Rogier, 5015 BK Tilburg (NL)
(74) Representative: De Vries & Metman

(56) References cited:
- WO-A1-2010/087707
- FR-A1- 2 827 476
- US-A1- 2010 124 357

## Description

The present invention relates to an apparatus and a method for counting and boxing chicks and optionally analyzing and/or selecting chicks.

NL 8302230 discloses a chick counter. Chicks are successively passed over a conveyor belt through a light beam. The shadow areas formed by the chicks are detected by a detector and the detection signals produced thereby are applied to an object counter. On basis of measurements of the height and the width of a shadow area it is determined whether this shadow area corresponds to a single chick or to a plurality of chicks.

FR 2 827 476 discloses a chick counter comprising a digital camera.

It has been found that such chick counters are not very accurate, since the chicks tend to sit very close to each other. Therefore, to improve accurateness, the chicks need to be individualized before they can be counted. Individualization and counting needs to be done with very high processing speeds. This results in stress with the chicks and possible injuries. Moreover, the processing speed with such systems is typically limited to about 30.000 chicks per hour per lane.

In a further step, the quality and the sex of the chicks needs to be checked. An automated system for checking the sex of chicks is for instance disclosed in EP 1 092 347. In this prior art system, chicks are individualized to be photographed one by one. Each chick is induced to lose its equilibrium to make it spread its wings. The feathers pattern at the wing tips constitutes a sex-distinguishable characteristic among chicks. When the wings are spread the wing feather pattern can be photographed using a digital camera. By applying appropriate image processing to the photograph the sex of the chick can be identified from the processed photograph of the wing feathers. In this prior art system the chicks are also weighed.

It is an object of the invention to provide a chick counting device and method more accurately counting chicks, while creating less stress with the chicks. It is a further object to enhance process speed to count more chicks per hour.

The object of the invention is achieved with a chick counter according to claim 1. For accurate counting, the data processing unit can be programmed to:
a. count individual chicks passing a virtual line at the lower end of the camera scope in an image captured by the camera;
b. subsequently compare the image with one or more earlier captured images to trace back the path of the individualized chicks;
c. correct the number of counted chicks if a chick counted for one in step a appears to be countable for two or more chicks in at least one earlier captured image.

The camera can for example be configured to output about at least 20, e.g., about at least 40 or at least 70 images per second. The camera can for instance be a digital movie camera. The camera may for example comprise one or more CCD's and/or CMOS sensors. The camera may be a colour camera, a black and white camera, a stereo camera or a camera suitable for recordal of UV and/or IR wave lengths. Optionally, two or more camera's can be used, for instance counting the chicks from different viewing angles. Optionally, filters can be used, e.g., for enhancing contrast.

The camera is directed to an end of the chick supply line arranged at a distance above a box positioner for positioning transporting boxes for receiving chicks. At least a part of the distance between the supply line end and the box positioner should be within the scope of the camera to capture images of falling chicks, which show the chicks with relatively large differences in moving speeds and directions. This allows improved individualization of the chicks by comparing subsequent images by pattern recognition software by tracking chicks during their fall.

Optionally, the chick counter comprises a guiding system responsive to the data processing unit for dosing a desired number of chicks to passing boxes. For instance, the data process unit can be programmed to box a given number of chicks into a box. After boxing the desired number of chicks a new box can be supplied, e.g., via a conveyor, or the guiding system can be redirected towards a new box.

The guiding system can for instance comprise guiding plates or air blowers or blasters with a controllable blowing angle to forward each chick in the desired direction.

Optionally, male chicks can be boxed into different containers than female chicks and/or unhealthy chicks can be isolated from healthier ones.

If an upstream part of the chick supply line is within the scope of the camera, the camera can also monitor the number of chicks approaching the end of the supply line. This makes it possible for instance to vary the transport speed of the supply line in dependence of the number of approaching chicks, e.g., accelerating the supply line if no or only a few chicks are approaching.

The data processing unit may further be programmed to determine other chick parameters such as volume, weight, colour, shape, sex, reflex, leg length, nostrils, beak quality and/or heel quality.

Volume can for instance be calculated by determining in the subsequent images the average length of the outline of a chick reduced with the outline of the wings or other less voluminous parts.

Weight can be estimated on basis of the determined volume and/or on basis of one or more other correlating parameters.

Colour can be tested by comparing captures R,G,B values with standard values. Colour is indicative for the health of the chicks. First class chicks have a brighter colour than second class chicks.

Also the leg length of the chicks is indicative for the chicks health. By measuring this parameter more useful information is obtained about the quality of the chick.

Heels can be recognized by the data processing unit by comparison with a pre-stored standard heel pattern. If the detected heels are too red, the chick is considered not to be healthy and is selected as not being first class. Similarly, beaks of first class chicks must be clean with open nostrils.

Reflex can be tested by unbalancing the chicks, for instance when they fall down from the outer edge of an upper conveyor. By reflex movement healthy chicks will spread their wings. The data processing unit can recognize this by comparing the shape of individualized chicks on subsequent images.

Optionally, the data processing unit operatively communicates with a chick sorter. Chicks without a proper reflex, with the wrong colour or shape or with deviant beaks or heels can be boxed into different containers than the healthy first class chicks and transported to a destruction unit or otherwise.

The camera can for instance be directed to an end of the conveyor and a slanting guiding plate in line with the conveyor end. Optionally, the slanting angle of the slanting guiding plate is adjustable by means of a positioner. This way, the guiding plate can selectively guide the chicks to different boxes. The guiding plate can be provided with a relief, such as vertical ribs, to reduce light reflection which may disturb proper imaging of the chicks.

Alternatively, or additionally, air blowers can be used to direct the chicks during their fall into the boxes.

The apparatus can be used for chicks of any type of poultry, such as chickens, ducks, turkeys or gooses.

The invention does not only pertain to the apparatus as such, but also to a process of counting chicks using such an apparatus and to a computer program for counting chicks by comparing subsequently captured digital images. Based on information derived from subsequent images captured by the camera, such computer program may also be programmed for controlling the conveyor speed and/or positioning the guiding plate and/or one or more blowers and/or further guiding elements for positioning individual chicks in a selected box.

The present invention will be elucidated with reference to the figures wherein:
- Figure 1:: shows a side view of an exemplary embodiment of a chick counter according to the present invention;
- Figure 2:: shows in perspective view a detail of the chick counter in Figure 1;
- Figure 3:: shows in perspective view a further detail of the chick counter in Figure 1.

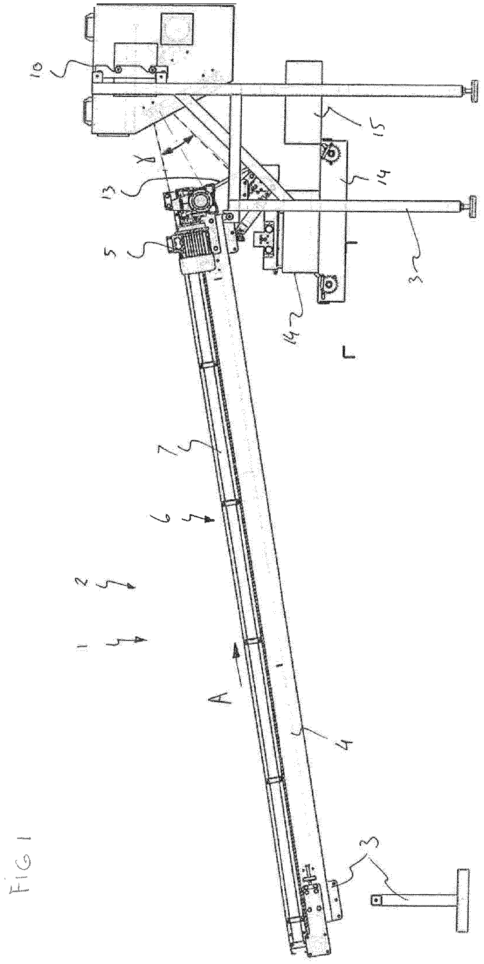

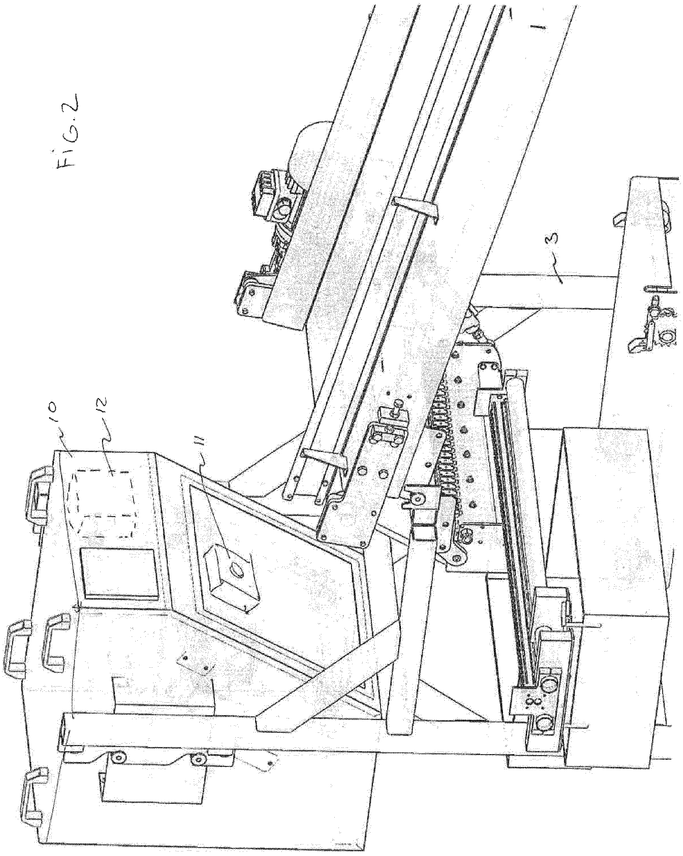

Figure 1 shows a chick counter 1 comprising a supply line 2 for supplying chicks to be counted (not shown). The supply line 2 comprises a frame 3 supporting an endless conveyor 4 driven by a motor 5. The sides of upper run 6 of the conveyor 4 are fenced with side walls 7 to prevent chicks from falling from the conveyor 4. The upper run 6 of the conveyor 4 is driven to move in the direction of arrow A in the drawing, which is slightly upward under an angle of about 0 - 40, e.g., about 20 - 30 degrees with the horizontal. At the upper end of the conveyor 4 the frame 3 supports a housing 10. As shown in Figure 2, the housing 10 encases a digital movie camera 11 and a data processing unit 12, shown schematically in dashed lines.

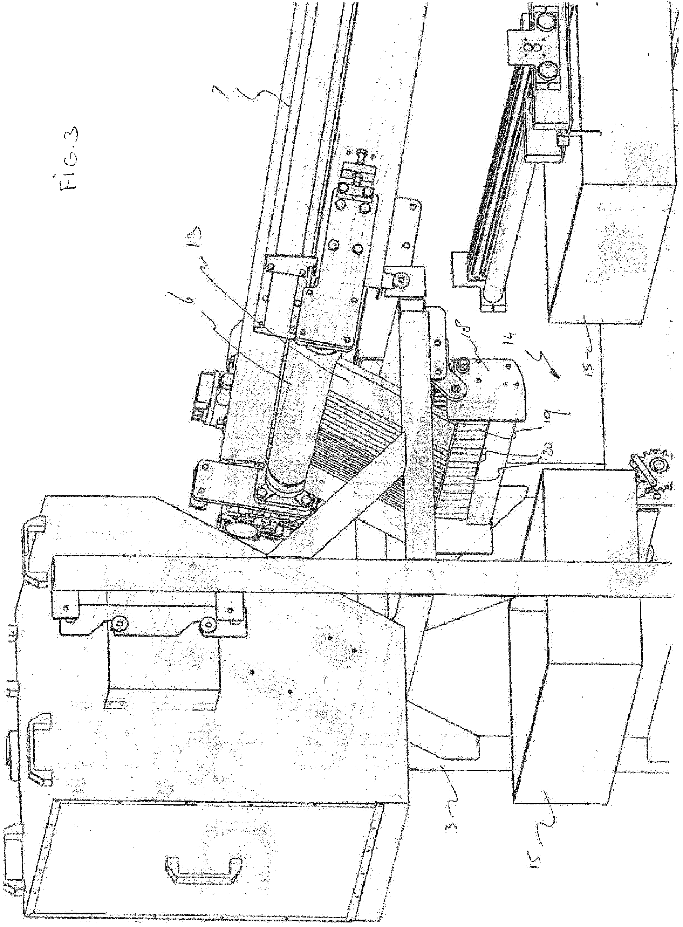

As shown in more detail in Figure 3, a slanting guiding plate 13 extends from the end of the upper run 6 of the conveyor 4 downwardly under an angle with the vertical. At a distance below the upper end of the upper run 6 below the slanting guiding plate 13 is a box positioner 14 for positioning boxes 15 for the transport of chicks.

In use, chicks are supplied by the conveyor 4 towards the end of the upper run 6. There, the chicks fall over the edge of the upper run 6. During their fall, the slanting guiding plate 13 guides the chicks towards a box 15 on the box positioner 14. After the box 15 is filled with a desired number of chicks (in practice typically 100, although other numbers can also be used) the box is removed and a new box 15 is placed below the slanting guiding plate 13.

As shown in Figure 1, the outer end of the upper run 6 and the upper part of the slanting guiding plate 13 are within the scope γ of the digital video camera 11.

The data processing unit 12 communicates with the camera 11. The data processing unit 12 is programmed to process images captured by the camera 11 by comparing a plurality of images of one or more chicks subsequently captured by the camera 11 during passage of one or more chicks. Per second about 50 - 80 images are recorded and compared by the data processing unit 12 with earlier captured images.

The data processing unit 12 compares each captured image with a stored image of the background, i.e. the image that the camera would capture if no chick would pass the camera scope γ. Pixels differing from the correspondingly positioned pixel of the stored background picture are considered to be foreground pixels.

When the chicks fall from the outer end of the upper run 6 of the conveyor 4 their mutual distance will increase. Each pattern formed by a bundle of foreground pixels with a closed outline is counted by the data processing unit 12 as an individual chick.

The data processing unit 12 counts each chick passing a virtual line at the lower end of the camera scope γ. Subsequently, the data processing unit 12 compares the captured image with earlier captured images to trace back the path of the individualized chicks. Each pattern on an image corresponds to a pattern at a higher position in an earlier image. In comparison with earlier captured pictures each chick on a captured image will have moved vertically and be slightly tilted. A pattern, in first instance recognized as a single chick, may show sections which may have followed different movements between an earlier and a later captured image. For instance one section may have fallen down more quickly than the other and/or one section may have been tilted in a different direction or under a different angle. If a pattern, counted by the data processing unit 12 as a single individual chick when it passes the virtual line, appears to be countable for two, or even more, chicks in an earlier captured image the counted number of chicks is corrected by the data processing unit. This way, the passing chicks can be very accurately counted. Counting speeds of 72.000 chicks per hour or even more can be achieved.

For each counted chick, one or more additional data files can be stored by the data processing unit 12. The data files can for instance contain data about texture, colour or shape or other data directly or indirectly indicative of the health or quality of the counted chick.

The box positioner 14 is configured to present two or more boxes 15 at a time to create the possibility to box selected chicks into a different box than other chicks. A first box 15 may be positioned right below the lower edge of the slanting guiding plate 13, while a second box 15 may be positioned in front of the first box 15. To guide each chick to the selected box, the frame 3 holds a blowing unit 18 along the width of the lower edge of the slanting guiding plate 13. The blowing unit 18 comprises a front plate 19 with a row of slits 20. The blowing unit 18 is operatively connected to a source of pressurized air (not shown) and can be actuated under the control of the data processing unit 12. A chick that needs to be boxed into the box right below the slanting guiding plate 13, is allowed to fall down straight into the box 15. A chick that needs to be boxed into the box 15 in front of the first box, can be blown into the box by an air blast from the blowing unit 18. Optionally, the blowing unit may be tiltable into two or more positions to direct the chicks with improved accuracy.

This enables separate boxing of, for example, male chicks and female chicks or first class chicks and second class chicks on basis of the data detected by the camera 11.

In an alternative embodiment, the slanting angle of the slanting guiding plate 13 can be adjusted by one or more pneumatic cylinders under the control of the data processing unit 12. If a box 15 is almost filled and the camera 11 detects the a large bunch of approaching chicks upstream the end of the upper run, the data processing unit 12 can adjust the slanting angle of the guiding plate 13 to guide the bunch of chicks into a next, empty box 15. Subsequently, when a smaller number of chicks arrives, the guiding plate can be moved back into its original position to complete filling of the first box.

## Claims

1. Chick counter (1) comprising at least one camera (11), a chick supply line (2) passing the scope of the camera, a box positioner for boxes for receiving chicks, and a data processing unit (12) communicating with the camera and programmed to process images captured by the camera **characterized in that** the data processing unit is programmed to identify and count individual chicks by comparing a plurality of subsequently captured images, wherein the camera (11) is directed to an end of the supply line, which end is arranged above said box positioner (14) such that the chicks fall, wherein at least a part of the distance between the supply line end and the box positioner (14) is within the scope of the camera.

2. Chick counter according to claim 1 wherein the data processing unit (12) is programmed to
a. count individual chicks passing a virtual line at the lower end of the camera scope in an image captured by the camera (11);
b. subsequently compare the image with one or more earlier captured images to trace back the path of the individualized chicks;
c. correct the number of counted chicks if a chick counted for one in step a appears to be countable for two or more chicks in at least one earlier captured image.

3. Chick counter according to claim 1 or 2 wherein the camera (11) is configured to output at least 40 images per second.

4. Chick counter according to claim 1, 2 or 3 wherein the camera (11) is a digital movie camera.

5. Chick counter according to any of the preceding claims comprising a guiding system (13) responsive to the data processing unit (12) for dosing a desired number of chicks to each passing box.

6. Chick counter according to any one of the preceding claims wherein a slanting guiding plate (13) defines a sliding path for the chicks from the conveyor end to the box positioner (14), wherein the guiding plate is at least partly within the scope of the camera (11).

7. Chick counter according to claim 6 wherein the slanting angle of the slanting guiding plate (13) is adjustable.

8. Chick counter according to any one of the preceding claims wherein the camera (11) comprises one or more CCDs and/or CMOS sensors.

9. Chick counter according to any one of the preceding claims wherein the parameters produced by the data processing unit (12) include volume, weight, colour, shape, sex, reflex, navel quality, beak quality and/or heel quality.

10. Chick counter according to any one of the preceding claims wherein the data processing unit (12) operatively communicates with a chick sorter.

11. Method for counting chicks by comparing subsequently digital images of a plurality of chicks captured by a camera (11), wherein chicks are counted during their fall from an end of a chick supply line (2), the method comprising the steps of:
a. counting chicks passing a virtual line at the lower end of the camera scope in an image captured by the camera;
b. subsequently comparing the image with one or more earlier captured images to trace back the path of the individualized chicks;
c. correct the number of counted chicks if a chick counted for one in step a appears to be countable for two or more chicks in at least one earlier captured image.

12. Computer program for counting chicks by a method according to claim 11.

## Patentansprüche

1. Kükenzähler (1), der wenigstens eine Kamera (11), eine Kükenzuführungslinie (2), die den Bereich der Kamera durchläuft, eine Kastenpositionierungseinrichtung für Kästen zum Aufnehmen der Küken, und eine Datenverarbeitungseinheit (12), die mit der Kamera kommuniziert und programmiert ist, um von der Kamera erfasste Bilder zu verarbeiten, aufweist,
**dadurch gekennzeichnet, dass** die Datenverarbeitungseinheit programmiert ist, um einzelne Küken durch Vergleichen mehrerer aufeinanderfolgend aufgenommener Bilder zu identifizieren und zu zählen, wobei die Kamera (11) auf ein Ende der Zuführungslinie gerichtet ist, wobei dieses Ende oberhalb der Kastenpositionierungseinrichtung (14) angeordnet ist, so dass die Küken fallen, wobei wenigstens ein Teil der Entfernung zwischen dem Zuführungslinienende und der Kastenpositionierungseinrichtung (14) innerhalb des Bereichs der Kamera liegt.

2. Kükenzähler nach Anspruch 1, wobei die Datenverarbeitungseinheit (12) programmiert ist, um
a. einzelne Küken, die eine virtuelle Linie an dem unteren Ende des Kamerabereichs durchlaufen, in einem von der Kamera (11) aufgenommenen Bild zu zählen;
b. anschließend das Bild mit einem oder mehreren früher aufgenommenen Bildern zu vergleichen, um den Weg der vereinzelten Küken zurückzuverfolgen;
c. die Anzahl gezählter Küken zu korrigieren, wenn ein in Schritt a als eins gezähltes Küken in wenigstens einem früher aufgenommenen Bild als zwei oder mehr Küken zählbar erscheint.

3. Kükenzähler nach Anspruch 1 oder 2, wobei die Kamera (11) konfiguriert ist, um wenigstens 40 Bilder pro Sekunde auszugeben.

4. Kükenzähler nach Anspruch 1, 2 oder 3, wobei die Kamera (11) eine digitale Filmkamera ist.

5. Kükenzähler nach einem der vorhergehenden Ansprüche, der ein Führungssystem (13) aufweist, das auf die Datenverarbeitungseinheit (12) anspricht, um eine gewünschte Anzahl von Küken in jeden vorbeilaufenden Kasten zu portionieren.

6. Kükenzähler nach einem der vorhergehenden Ansprüche, wobei eine geneigte Führungsplatte (13) einen Gleitweg für die Küken von dem Fördererende zu der Kastenpositionierungseinrichtung (14) definiert, wobei die Führungsplatte wenigstens teilweise innerhalb des Bereichs der Kamera (11) liegt.

7. Kükenzähler nach Anspruch 6, wobei der Neigungswinkel der geneigten Führungsplatte (13) einstellbar ist.

8. Kükenzähler nach einem der vorhergehenden Ansprüche, wobei die Kamera (11) einen oder mehrere CCDs und/oder CMOS-Sensoren aufweist.

9. Kükenzähler nach einem der vorhergehenden Ansprüche, wobei die von der Datenverarbeitungseinheit (12) erzeugten Parameter Volumen, Gewicht, Farbe, Form, Geschlecht, Reflex, Nabelqualität, Schnabelqualität und/oder Fersenqualität umfassen.

10. Kükenzähler nach einem der vorhergehenden Ansprüche, wobei die Datenverarbeitungseinheit (12) betriebsfähig mit einem Kükensortierer kommuniziert.

11. Verfahren zum Zählen von Küken durch Vergleichen von aufeinanderfolgenden digitalen Bildern einer Vielzahl von Küken, die von einer Kamera (11) aufgenommen werden, wobei die Küken während ihres Falls von einem Ende einer Kükenzuführungslinie (2) gezählt werden, wobei das Verfahren die folgenden Schritte aufweist:
a. Zählen von Küken, die eine virtuelle Linie an dem unteren Ende des Kamerabereichs durchlaufen, in einem von der Kamera (11) aufgenommenen Bild;
b. anschließend Vergleichen des Bilds mit einem oder mehreren früher aufgenommenen Bilder, um den Weg der vereinzelten Küken zurückzuverfolgen;
c. Korrigieren der Anzahl gezählter Küken, wenn ein in Schritt a als eins gezähltes Küken in wenigstens einem früher aufgenommenen Bild als zwei oder mehr Küken zählbar erscheint.

12. Computerprogramm zum Zählen von Küken mit einem Verfahren nach Anspruch 11.

## Revendications

1. Compteur de poussins (1) comprenant au moins une caméra (11), une ligne d'alimentation en poussins (2) passant devant le champ de la caméra, un positionneur de boîtes pour des boîtes destinées à recevoir des poussins, et une unité de traitement de données (12) communiquant avec la caméra et programmée pour traiter des images capturées par la caméra, **caractérisé en ce que** l'unité de traitement de données est programmée pour identifier et compter des poussins individuels en comparant une pluralité d'images capturées ultérieurement, dans lequel la caméra (11) est dirigée vers une extrémité de la ligne d'alimentation, laquelle extrémité est agencée au-dessus dudit positionneur de boîtes (14) pour que les poussins tombent, dans lequel au moins une partie de la distance entre l'extrémité de ligne d'alimentation et le positionneur de boîtes (14) est dans le champ de la caméra.

2. Compteur de poussins selon la revendication 1, dans lequel l'unité de traitement de données (12) est programmée pour
a. compter des poussins individuels passant une ligne virtuelle au niveau de l'extrémité inférieure du champ de caméra dans une image capturée par la caméra (11) ;
b. comparer ultérieurement l'image avec une ou plusieurs images capturées précédemment pour retracer le trajet des poussins individualisés ;
c. corriger le nombre de poussins comptés si un poussin compté pour un à l'étape a semble avoir été compté comme deux poussins ou plus dans au moins une image capturée précédemment.

3. Compteur de poussins selon la revendication 1 ou 2, dans lequel la caméra (11) est configurée pour fournir en sortie au moins 40 images par seconde.

4. Compteur de poussins selon la revendication 1, 2 ou 3, dans lequel la caméra (11) est une caméra cinéma numérique.

5. Compteur de poussins selon l'une quelconque des revendications précédentes, comprenant un système de guidage (13) qui répond à l'unité de traitement de données (12) pour doser un nombre de poussins souhaité pour chaque boîte qui passe.

6. Compteur de poussins selon l'une quelconque des revendications précédentes, dans lequel une plaque de guidage inclinée (13) définit un trajet de glissement pour les poussins de l'extrémité de transporteur au positionneur de boîtes (14), dans lequel la plaque de guidage est au moins en partie dans le champ de la caméra (11).

7. Compteur de poussins selon la revendication 6, dans lequel l'angle d'inclinaison de la plaque de guidage inclinée (13) est réglable.

8. Compteur de poussins selon l'une quelconque des revendications précédentes, dans lequel la caméra (11) comprend un ou plusieurs DCC et/ou capteurs CMOS.

9. Compteur de poussins selon l'une quelconque des revendications précédentes, dans lequel les paramètres produits par l'unité de traitement de données (12) incluent le volume, le poids, la forme, le sexe, le réflexe, la qualité de l'ombilic, la qualité du bec et/ou la qualité du talon.

10. Compteur de poussins selon l'une quelconque des revendications précédentes, dans lequel l'unité de traitement de données (12) communique opérationnellement avec un trieur de poussins.

11. Procédé de comptage de poussins en comparant des images numériques ultérieures d'une pluralité de poussins capturées par une caméra (11), dans lequel des poussins sont comptés pendant leur chute depuis une extrémité d'une ligne d'alimentation en poussins (2), le procédé comprenant les étapes de :
a. comptage de poussins passant une ligne virtuelle au niveau de l'extrémité inférieure du champ de caméra dans une image capturée par la caméra ;
b. comparaison ultérieure de l'image avec une ou plusieurs images capturées précédemment pour retracer le trajet des poussins individualisés ;
c. correction du nombre de poussins comptés si un poussin compté pour un à l'étape a semble avoir été compté comme deux poussins ou plus dans au moins une image capturée précédemment.

12. Programme d'ordinateur de comptage de poussins par un procédé selon la revendication 11.
